(19) Europäisches Patentamt
European Patent Office
Office européen des brevets

(11) **EP 2 703 209 B1**

(12) **FASCICULE DE BREVET EUROPEEN**

(45) Date de publication et mention
de la délivrance du brevet:
**17.07.2019 Bulletin 2019/29**

(51) Int Cl.:
***B60L 15/20*** *(2006.01)*      ***B60W 20/00*** *(2016.01)*
***B60W 50/00*** *(2006.01)*      ***B60W 50/04*** *(2006.01)*

(21) Numéro de dépôt: **13306120.0**

(22) Date de dépôt: **02.08.2013**

(54) **Procédé de détermination d'un indicateur energétique d'un deplacement d'un vehicule**

Verfahren zur Bestimmung eines Energieindikators für die Bewegung eines Fahrzeugs

Method for determining an energy indicator of a movement of a vehicle

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.08.2012 FR 1202351**

(43) Date de publication de la demande:
**05.03.2014 Bulletin 2014/10**

(73) Titulaire: **IFP Energies nouvelles**
**92500 Rueil-Malmaison (FR)**

(72) Inventeurs:
• **Chasse, Alexandre**
**75017 Paris (FR)**
• **Dib, Wissam**
**92150 Suresnes (FR)**
• **Di Domenico, Domenico**
**69007 Lyon (FR)**
• **Moulin, Philippe**
**75015 Paris (FR)**
• **Sciarretta, Antonio**
**92500 Rueil-Malmaison (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
| | |
|---|---|
| EP-A1- 2 219 092 | WO-A1-2011/128410 |
| DE-A1-102009 021 019 | US-A1- 2010 049 400 |
| US-A1- 2010 235 030 | US-A1- 2011 276 216 |

**Description**

La présente invention concerne le domaine des véhicules, plus particulièrement le domaine de la commande de véhicules afin de réaliser une éco-conduite.

Pour diminuer les émissions polluantes et la consommation énergétique des véhicules, les constructeurs automobiles développent des véhicules plus respectueux de l'environnement : notamment des véhicules électriques, des véhicules hybrides, ou par dimensionnement des moteurs thermiques... Toutefois, il est également possible de limiter la consommation énergétique et les émissions polluantes en incitant les utilisateurs des véhicules à une conduite plus écologique, appelée aussi éco-conduite. L'éco-conduite est un terme général qui désigne l'amélioration de l'efficacité énergétique de la conduite, c'est-à-dire l'optimisation de l'énergie nécessaire pour parcourir un trajet en un temps donné.

Afin d'alerter le conducteur sur la qualité de sa conduite, une première solution développée consiste à informer le conducteur de sa consommation instantanée de carburant. Les demandes de brevet DE 19901532 A, KR 100520941 B1 illustrent des méthodes de calcul de la consommation momentanée de carburant. De la même façon, d'autres améliorations ont porté sur l'indication au conducteur des émissions polluantes momentanées ou cumulées. Par exemple, la demande de brevet EP 2 166 309 A illustre ce type de technique. Ces deux informations (consommation, émissions polluantes), seules ou combinées, ne permettent pas de savoir si la conduite peut être optimisée d'un point de vue écologique ; en effet le conducteur n'est pas en mesure de comparer les données affichées à des valeurs qui correspondraient à une éco-conduite.

Pour pallier ce problème, la demande de brevet EP 1 973 078 A1 décrit une méthode de détermination de la consommation énergétique qui compare la consommation d'énergie actuelle pour un trajet à une consommation d'énergie antérieure enregistrée pour le même trajet. Pour comparer les données, cette méthode nécessite donc l'existence de trajets antérieurs et l'enregistrement de ces informations. Par conséquent, le conducteur ne peut pas être informé du caractère écologique de sa conduite pour un trajet qui n'a pas encore été parcouru. De plus, cette méthode ne permet pas de prendre en compte les contraintes extérieures de conduite (signalisation routière, trafic routier...) : en effet, si le trajet antérieur a été enregistré dans des conditions de circulation idéale (par exemple sans arrêt lié au trafic), et si les conditions de circulation courantes sont moins bonnes, l'information communiquée au conducteur ne sera pas représentative du caractère écologique de sa conduite par les conditions extérieures courantes.

D'autres développements concernent le calcul d'une consommation énergétique idéale, afin d'avoir un point de repère pour la comparaison avec la consommation réelle. La demande de brevet EP 2 147 285 A1 décrit une méthode mettant en oeuvre une telle comparaison.

Pour cette méthode, un signal est généré quand la consommation énergétique diffère de la consommation idéale. Toutefois, cette méthode présente le même inconvénient que la méthode précédemment décrite ; elle ne permet pas de prendre en compte les contraintes extérieures de conduite.

La demande de brevet EP 2 311 683 A1 décrit une autre méthode qui permet d'indiquer au conducteur si sa conduite peut être qualifiée d'éco-conduite ou non. Cette méthode est utilisable pour un véhicule hybride. Pour cette méthode, on détermine si les paramètres de conduite sont dans une zone écologique, une zone écologique hybride ou dans une zone non écologique. Étant donné la limitation à ces seules trois zones, il n'est pas possible de quantifier précisément la conduite. De plus, ces zones sont définies par des seuils prédéfinis, il n'est donc pas possible de prendre en compte les contraintes extérieures de conduite.

La demande de brevet US 2010/ 0 049 400 A1 décrit une méthode pour estimer les perturbations d'un véhicule. Toutefois, cette méthode utilise un découpage du déplacement par périodes d'échantillonnages, ou distance spécifiée ou modification de la consigne de vitesse. Elle ne quantifie pas la conduite.

L'invention concerne un procédé de détermination d'au moins un indicateur du caractère écologique de la conduite, dans lequel on détermine au moins un premier indicateur sous la forme d'une vitesse optimale qui minimise la consommation énergétique. Le calcul de la vitesse optimale est contraint par des vitesses mesurées à des points de passage du déplacement, pour lesquels le conducteur a du adapter sa conduite en fonction de conditions extérieures au déplacement.

**Le procédé selon l'invention**

L'invention concerne un procédé de détermination d'au moins un indicateur énergétique d'un déplacement d'un véhicule, ledit déplacement correspondant à un mouvement dudit véhicule entre deux arrêts successifs dudit véhicule. Pour ce procédé, on réalise les étapes suivantes :

a) on mesure la vitesse instantanée du véhicule pendant ledit déplacement ;
b) on identifie au moins un point de passage dudit déplacement, pour lequel ladite vitesse instantanée a été modifiée en fonction de conditions extérieures audit déplacement ;
c) on décompose ledit déplacement en au moins un sous-déplacement, chaque sous-déplacement étant défini entre deux points de passage successifs, et on détermine pour chaque sous-déplacement une distance et une vitesse moyenne dudit sous-déplacement au moyen de ladite vitesse instantanée mesurée ; et
d) on détermine, en tant que premier indicateur énergétique, une vitesse optimale dudit déplacement, ladite vitesse optimale étant calculée pour chaque sous-déplacement

Selon l'invention, on adapte la conduite dudit véhicule en fonction dudit indicateur énergétique.

De préférence, on identifie au moins un point de passage en déterminant au moins un ralentissement du véhicule à partir de ladite vitesse instantanée mesurée et/ou un point de rebroussement de la vitesse instantanée du véhicule et/ou un arrêt du véhicule et/ou en déterminant une signalisation routière et/ou une condition du trafic et/ou une configuration de la route, qui nécessitent une adaptation de la vitesse dudit véhicule.

Alternativement, on identifie un prochain point de passage au moyen de cartographies et de statistiques concernant les trajets antérieurs ou concernant une signalisation routière et/ou une condition de trafic et/ou une configuration de la route.

De plus, ledit point de passage est identifié au moyen d'un appareil de géolocalisation dudit véhicule et/ou en fonction de l'état du système de freinage dudit véhicule.

De manière préférentielle, ledit algorithme d'optimisation est une programmation dynamique, ou une méthode hamiltonienne.

De préférence, ledit algorithme d'optimisation est contraint par la vitesse maximale autorisée.

Selon l'invention, on peut déterminer un deuxième indicateur énergétique en mettant en oeuvre les étapes suivantes :

e) on calcule une énergie optimale en fonction de ladite vitesse optimale au moyen d'un modèle de propulsion dudit véhicule qui relie l'énergie consommée par le véhicule à la vitesse du véhicule ; et
f) on détermine ledit deuxième indicateur énergétique au moyen de ladite énergie optimale et de l'énergie consommée pendant ledit déplacement, ladite énergie consommée étant mesurée ou calculée à partir de ladite vitesse mesurée et dudit modèle de propulsion du véhicule.

Avantageusement, ledit deuxième indicateur énergétique est calculé pendant ledit déplacement.

En outre, ledit deuxième indicateur peut être une note proportionnelle au rapport de l'énergie optimale sur l'énergie consommée.

Selon un mode de réalisation de l'invention, ledit modèle de propulsion du véhicule est construit à partir de l'équation sur l'axe longitudinal du véhicule du principe fondamental de la dynamique appliqué au véhicule, ledit modèle dépendant de la motorisation, des moyens de transmission, des dimensions des roues et de la masse du véhicule.

Avantageusement, le véhicule est un véhicule automobile électrique alimenté par une batterie, l'énergie consommée étant fonction de l'état de charge de ladite batterie.

Selon un mode de réalisation de l'invention, on affiche ledit au moins un indicateur énergétique à la fin de chaque déplacement.

De préférence, on affiche ledit au moins un indicateur sur le tableau de bord dudit véhicule, sur un site internet ou sur un dispositif portatif autonome, tel qu'un appareil de géolocalisation ou un téléphone portable.

Avantageusement, ledit deuxième indicateur énergétique est un conseil d'accélération et/ou de décélération du véhicule.

Selon un mode de réalisation de l'invention, on réitère les étapes a) à d) pour plusieurs déplacements formant un trajet et on détermine ledit au moins un indicateur énergétique pour ledit trajet.

L'invention concerne également un procédé de contrôle d'un véhicule. Pour ce procédé, on réalise les étapes suivantes :

i) on détermine au moins un indicateur énergétique tel que décrit précédemment ; et
ii) on adapte la conduite dudit ledit véhicule en fonction dudit indicateur énergétique.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé tel que décrit précédemment, lorsque ledit programme est exécuté sur un ordinateur.

## Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre les étapes du procédé selon l'invention.
La figure 2 représente les étapes d'un mode de réalisation du procédé selon l'invention.
La figure 3 illustre les vitesses mesurée et optimale d'un déplacement en fonction du temps.
La figure 4 illustre les indicateurs et données affichées pour le même déplacement selon un mode de réalisation de l'invention.

## Description détaillée de l'invention

Le procédé selon l'invention permet de déterminer au moins un indicateur énergétique, représentatif du caractère écologique de la conduite, pour un déplacement d'un véhicule. Cet indicateur peut ensuite être utilisé pour commander le véhicule, soit en informant le conducteur qui va adapter sa conduite, soit par un contrôle des moyens de motorisation du véhicule.

On appelle indicateur énergétique, un indicateur qui donne une information sur le caractère écologique de la conduite pendant le déplacement, c'est à dire sur l'énergie consommée par le véhicule. Il peut représenter une comparaison entre l'énergie consommée par le véhicule et une énergie minimale nécessaire au déplacement.

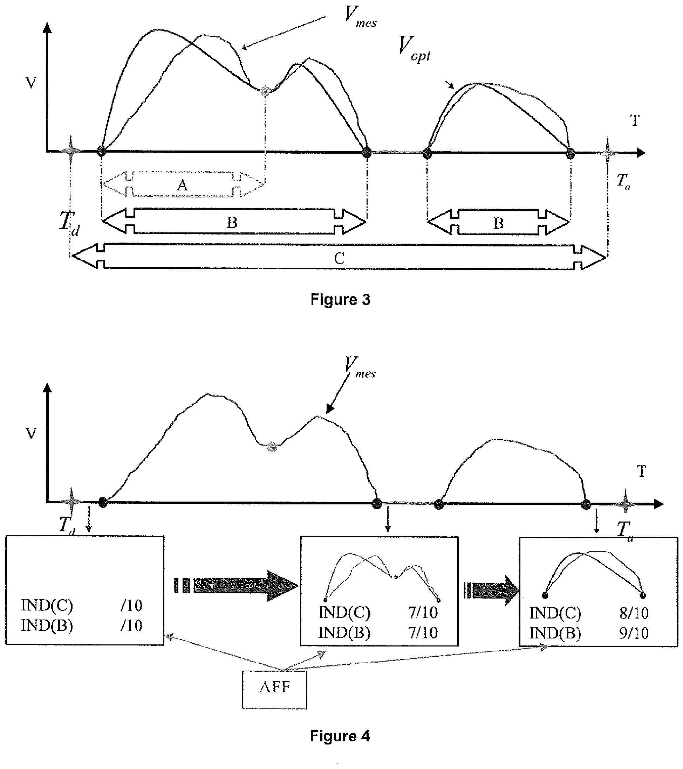

Un trajet est défini comme étant le temps passé par le conducteur à bord du véhicule et il est découpé en différentes phases pour la détermination de l'indicateur. Sur la figure 3, sont représentées, entre autres, les différentes phases d'un trajet :

- Trajet (C) : Phase de présence du conducteur à bord du véhicule. Cette phase commence avec le démarrage du véhicule ($T_d$) et finit avec l'arrêt définitif du véhicule et la sortie du conducteur du véhicule ($T_a$). Un trajet peut être constitué de plusieurs déplacements.
- Déplacement (B) : Phase de mouvement du véhicule entre deux arrêts consécutifs du véhicule. Un déplacement peut comprendre plusieurs sous déplacements.
- Sous déplacement (A) : Phase de mouvement du véhicule entre deux points de passage, dont les vitesses de passage sont supérieures ou égales à zéro. Ces points de passage, ou "breakpoint", définissent des contraintes du déplacement. Pour ces points de passage, le conducteur à été contraint de passer cette position géographique avec une vitesse de passage particulière pour des raisons de signalisation (priorité à droite, virage, feux tricolores,...), de trafic (bouchon, freinage du véhicule de devant, traversée d'un piéton,...), ou des considérations géographiques (virage, dénivelé, ...). Les vitesses associées à ces points de passage peuvent être :

  ◦ soit une vitesse nulle dans le cas où le véhicule s'arrête ou accélère après un arrêt.
  ◦ soit une vitesse non nulle dans le cas où le conducteur a du décélérer ou accélérer pour une raison liée à la signalisation ou au trafic. Sur l'exemple illustré à la figure 3, le point de passage de la fin du sous-déplacement (A) correspond à une décélération du véhicule.

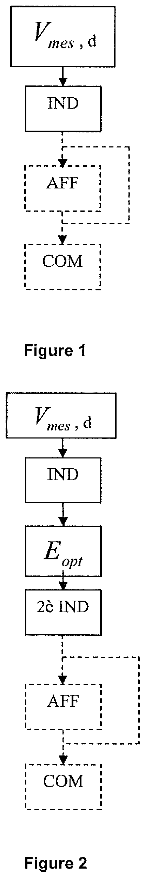

Le procédé selon l'invention est représenté sur la figure 1. Selon l'invention, le procédé comporte les étapes suivantes :

1) Mesure de la vitesse et détermination de la distance parcourue ($V_{mes}$, d),
2) Détermination d'au moins un indicateur énergétique (IND).

En outre, le procédé selon l'invention peut comprendre les étapes facultatives indépendantes suivantes :

3) Affichage de l'indicateur (AFF), et
4) Commande du véhicule (COM).

Une opération préalable peut être effectuée avant les différentes étapes est la détermination de l'état du véhicule, c'est-à-dire s'il est démarré, à l'arrêt, en roulage... Pour cela, on peut analyser la vitesse du véhicule et l'état du frein du véhicule. Ainsi, il est possible de déterminer si le véhicule est à l'arrêt et s'il s'agit d'une fin de trajet ou d'une fin de déplacement. Les étapes suivantes sont alors mises en oeuvre uniquement si le véhicule est démarré.

### Étape 1) Mesure de la vitesse et détermination de la distance ($V_{mes}$, d)

Pour déterminer l'indicateur énergétique d'un déplacement, on utilise la vitesse instantanée du véhicule et la distance parcourue. Pour cela, on mesure de manière classique la vitesse instantanée du véhicule $V_{mes}$ en fonction du temps, cette vitesse est enregistrée.

A partir de la vitesse mesurée $V_{mes}$, on calcule la distance d parcourue sur le déplacement, par intégration de la vitesse par rapport au temps. Cette distance peut être calculée pendant le déplacement. Alternativement, la distance d est mesurée pendant le déplacement. La distance est également enregistrée.

### Étape 2) Détermination d'au moins un indicateur (IND)

Selon l'invention, on détermine un premier indicateur quantitatif correspondant à la vitesse optimale du véhicule $V_{opt}$, qui minimise l'énergie consommée par le véhicule pendant le déplacement. Selon un mode de réalisation de l'invention illustré en figure 2, on détermine un deuxième indicateur qualitatif à partir de l'énergie optimale.

### Détermination du premier indicateur ($V_{opt}$)

La vitesse optimale $V_{opt}$ est déterminée par définition d'une vitesse optimale pour chaque sous-déplacement, de manière à respecter les vitesses initiale, finale et moyenne, ainsi que la distance du sous-déplacement réalisé. Les vitesses initiale et finale de chaque sous-déplacement sont les vitesses aux points de passage. La vitesse moyenne et la distance parcourue sont déterminées au moyen de la vitesse instantanée mesurée. En prenant en compte ces données, la vitesse optimale est conditionnée par le déplacement réalisé et donc par les conditions extérieures qui ont imposé une vitesse au véhicule.

Selon un mode de réalisation de l'invention, pour déterminer la vitesse optimale $V_{opt}$ on détermine dans un premier temps les points de passage du déplacement, pour lesquels la vitesse de déplacement a été adaptée (par le conducteur), notamment pour une signalisation routière : rond-point, cédez-le-passage..., une condition de trafic : travaux, freinage du véhicule situé devant, embouteillage... et/ou pour la configuration géographique de la route : virage, dénivelé... Ces points de passage sont donc essentiellement des ralentissements du véhicule. On peut donc déterminer les points de passage en déterminant des arrêts ou des minima locaux de la vitesse pendant un déplacement. Par exemple, on peut détecter les points de rebroussement de la vitesse véhicule, c'est à dire les points pour lesquels la dérivée de la vitesse change de signe (elle était négative et elle devient positive). Il est également possible d'identifier les points de passage au moyen d'un appareil de géolocalisation, de type GPS, qui peut répertorier la signalisation routière, la configuration de la route et le trafic. Pour cela, on peut situer le véhicule sur une cartographie (carte routière) par rapport à des obstacles qui sont présents (carrefours, feux...). De plus, on peut identifier les points de passage en fonction de l'état du système de freinage du véhicule. On peut également envisager dans le cas des véhicules communiquant, d'identifier ces points de passage au moyen de communications établies entre le véhicule et les véhicules situés dans son environnement proche ou de communications établies entre le véhicule et les feux de signalisation. A chaque point de passage est donc définie une vitesse imposée, qui sera une vitesse initiale et/ou une vitesse finale pour le calcul de la vitesse optimale.

Dans un deuxième temps, on détermine pour chaque sous-déplacement la vitesse optimale $V_{opt}$ au moyen d'un algorithme d'optimisation qui détermine la vitesse qui minimise la consommation énergétique, l'algorithme étant contraint par les vitesses aux points de passage (vitesses initiale et finale), par la vitesse moyenne et la distance du sous-déplacement. L'algorithme d'optimisation détermine une vitesse optimale pour chaque sous-déplacement, en passant par les points de passage préalablement identifiés. En effet, les points de passage définissent la vitesse initiale et la vitesse finale de chaque sous-déplacement, la vitesse mesurée permet de déterminer une vitesse moyenne sur le sous-déplacement. L'algorithme permet de déterminer une vitesse optimale pour chaque sous-déplacement avec une même distance, pendant une même durée (ou de même vitesse moyenne) avec une vitesse initiale et une vitesse finale connues. Ainsi, le calcul de la vitesse optimale prend en compte des contraintes extérieures de conduite indépendantes de la conduite. L'indicateur énergétique qui en découle est donc bien adapté au déplacement courant. Pour l'algorithme d'optimisation, on peut utiliser des calculs qui ont été réalisés hors ligne et stockés en mémoire, un tel exemple d'algorithme peut être la programmation dynamique (qui est une technique algorithmique pour optimiser des sommes de fonctions monotones croissantes sous contrainte et qui s'appuie sur un principe simple : toute solution optimale s'appuie elle-même sur des sous-problèmes résolus localement de façon optimale). On peut également utiliser des calculs en ligne, par exemple par une approche hamiltonienne (qui utilise l'opérateur mathématique hamiltonien), ou on peut résoudre le problème d'optimisation de façon analytique à partir d'un modèle simplifié du véhicule. Cet algorithme d'optimisation peut prendre en compte également les limitations de vitesse au moyen d'informations transmises par un appareil de géolocalisation.

La figure 3 illustre la vitesse optimale $V_{opt}$ calculée pour la vitesse mesurée $V_{mes}$ représentée pour un exemple de trajet comprenant deux déplacements, le premier déplacement étant formé de deux sous-déplacements. On vérifie que le point de passage est commun aux deux courbes. On peut constater que l'éco-conduite nécessite dans ce cas une accélération plus importante au démarrage et une décélération plus lente pour s'arrêter par rapport au trajet réalisé.

Ce premier indicateur énergétique est un indicateur quantitatif.

Détermination d'un deuxième indicateur

Selon un mode de réalisation préférentiel de l'invention, on détermine un deuxième indicateur énergétique. Ce mode de réalisation est illustré en figure 2. En plus des étapes précédemment décrites, on calcule l'énergie optimale ($E_{opt}$) puis on en déduit le deuxième indicateur (2è IND).

Calcul de l'énergie optimale ($E_{opt}$)

Cette étape permet de calculer la consommation d'énergie en fonction de la vitesse optimale $V_{opt}$. Ce calcul est effectué au moyen d'un modèle de propulsion du véhicule à partir de la vitesse optimale $V_{opt}$ précédemment calculée.

On appelle modèle de propulsion du véhicule, un modèle qui relie l'énergie consommée par le véhicule à la vitesse du véhicule. Ce modèle prend en compte la dynamique du véhicule et peut faire intervenir notamment la motorisation du véhicule (qui peut être thermique, électrique ou hybride), les moyens de transmission, les dimensions des roues, et la masse du véhicule.

Selon un mode de réalisation de l'invention, pour construire ce modèle de propulsion du véhicule, on peut écrire l'équation de la dynamique du véhicule selon son axe longitudinal (application du principe fondamental de la dynamique au véhicule) :

$$M \frac{dv}{dt} = F_T - F_{res} - F_{slope} - F_{brk}$$

avec M la masse totale du véhicule,
v la vitesse du véhicule,
$F_T$ est la force de traction liée à la motorisation du véhicule,
$F_{res}$ est la force résistive qui comprend le frottement dynamique le frottement de roulement,

$F_{slope}$ est la force engendrée par la gravité, et
$F_{brk}$ est la force de freinage mécanique.

$F_{res}$ peut être exprimé en fonction de la vitesse sous la forme $F_{res} = a + bv + cv^2$ avec a,b,c des paramètres du véhicule à identifier (une seule identification par véhicule suffit).

$F_{slope}$ peut être exprimé en fonction de la masse du véhicule et de l'inclinaison $\alpha$ de la route : $F_{slope} = Mg \sin(\alpha)$.

En écrivant une égalité de couples au niveau des roues entre le couple de rotation de la roue et le couple fourni par la motorisation, on peut formuler une expression de la force de traction $F_T$ : $F_T R_{tyre} = T_{mot} r_1 \eta_{trans}$ avec $R_{tyre}$ le rayon des roues, $T_{mot}$ le couple fournit par la motorisation, $r_1$ le rapport de transmission du moteur à la roue et $\eta_{trans}$ le rendement de la transmission. Au moyen de ces équations, on peut écrire une formule qui relie le couple en sortie du moteur $T_{mot}$ à la vitesse v du véhicule et qui est fonction d'autres paramètres connus ou déterminables.

Au moyen de cartographies, d'abaques ou d'équations de modélisation des moyens de motorisation, on peut déterminer l'énergie consommée en fonction du couple moteur $T_{mot}$.

Par exemple, pour un moteur électrique, on peut exprimer classiquement le couple en fonction du courant électrique, puis ensuite en déduire l'énergie consommée. On obtient alors une relation entre l'énergie consommée et la vitesse du véhicule. C'est cette relation qui est appelée modèle de propulsion du véhicule.

Détermination d'un deuxième indicateur énergétique (2è IND)

Le deuxième indicateur énergétique représente une comparaison entre l'énergie consommée optimale $E_{opt}$ et l'énergie consommée $E_{cons}$. L'énergie consommée $E_{cons}$ peut être soit mesurée directement, soit calculée. Pour la mesure de l'énergie consommée, on peut se baser sur l'état de charge de la batterie électrique pour un véhicule électrique. En ce qui concerne le calcul, celui-ci peut correspondre à l'utilisation du modèle de propulsion du véhicule évoqué ci-dessus avec la vitesse mesurée $V_{mes}$ du véhicule.

Cette énergie consommée est déterminée pour chaque déplacement et est également enregistrée. De manière avantageuse, on forme une table d'enregistrement dans laquelle on mémorise la vitesse mesurée $V_{mes}$, la vitesse optimale $V_{opt}$, et l'énergie consommée $E_{cons}$. Cet enregistrement peut être périodique à une fréquence de 1 Hz.

Lors de cette étape, on détermine un ou plusieurs indicateurs. Déterminer plusieurs indicateurs permet d'avoir plusieurs informations différentes permettant une meilleure analyse de la conduite, par exemple en ayant des informations à la fois sur le pourcentage d'éco-conduite et sur la quantité d'énergie pouvant être économisée.

Selon une première variante de réalisation, l'indicateur énergétique IND peut être calculé comme le rapport de l'énergie optimale $E_{opt}$ sur l'énergie consommée :

$$IND = \frac{E_{opt}}{E_{cons}}.$$

Cet indicateur permet d'exprimer sous forme de pourcentage ou de note le caractère écologique de la conduite.

Selon une deuxième variante de réalisation, l'indicateur énergétique IND peut être calculé comme la différence entre l'énergie optimale $E_{opt}$ et l'énergie consommée $E_{cons}$ : $IND = E_{cons} - E_{opt}$. Cet indicateur permet de quantifier l'énergie consommée qui pourrait être économisée au moyen d'une éco-conduite.

Selon une troisième variante de réalisation, l'indicateur énergétique IND peut être calculé comme la différence entre l'énergie optimale $E_{opt}$ et l'énergie consommée $E_{cons}$, le tout divisé par l'énergie consommée $E_{cons}$ :

$$IND = \frac{E_{cons} - E_{opt}}{E_{cons}}.$$

Cet indicateur permet de quantifier en pourcentage l'énergie consommée qui pourrait être économisée au moyen d'une éco-conduite par rapport à la conduite réalisée.

D'autres indicateurs énergétiques peuvent être formés sans sortir du cadre de l'invention.

Le deuxième indicateur est donc un indicateur quantitatif.

Avantageusement, les indicateurs sont déterminés en cours de déplacement ou à la fin de chaque déplacement.

Étape 3) Affichage de l'indicateur (AFF)

On rappelle que cette étape est facultative et constitue un mode de réalisation préférentiel de l'invention.

Une fois le ou les indicateurs énergétiques déterminés, on peut transmettre cette information au conducteur au moyen d'un affichage. Cet affichage peut être réalisé à bord du véhicule : sur le tableau de bord, sur un dispositif portatif autonome, tel qu'un appareil de géolocalisation (de type GPS), un téléphone portable (de type ordiphone, traduction de l'anglicisme smartphone). Il est également possible d'afficher cet indicateur sur un site internet, que le conducteur peut consulter postérieurement à sa conduite.

Le deuxième indicateur peut être affiché sous forme d'une note, d'un pourcentage, au moyen d'un signal lumineux, dont la couleur varie en fonction de la valeur de l'indicateur. Par exemple, si on choisit l'indicateur de la première variante de réalisation :

$$IND = \frac{E_{opt}}{E_{cons}} ,$$

on peut convertir ce rapport en note sur 10. Une note élevée traduit alors une conduite écologique, au contraire d'une note faible.

De plus, on peut également afficher les courbes de la vitesse mesurée $V_{mes}$ et de la vitesse optimale $V_{opt}$. Ainsi, le conducteur peut comparer la vitesse du déplacement à la vitesse d'une éco-conduite, en analysant ces courbes il peut déterminer les améliorations à apporter à sa conduite pour obtenir une conduite écologique.

Afin de ne pas déconcentrer le conducteur pendant sa conduite, on peut afficher ces informations (indicateur(s) et courbes) à la fin d'un déplacement, c'est-à-dire uniquement quand le véhicule est à l'arrêt.

Étape 4) Commande du véhicule (COM)

On rappelle que cette étape est facultative et concerne un mode de réalisation préférentiel de l'invention. Cette étape est indépendante de l'étape 3) d'affichage de l'indicateur.

Une fois le ou les indicateurs énergétiques déterminés, on peut commander le véhicule de manière à optimiser la conduite d'un point de vue écologique. Cette modification de la commande du véhicule peut consister d'une part en l'adaptation du comportement du conducteur en fonction des informations affichées, ou d'autre part il peut s'agir d'une commande automatique du véhicule en fonction des indicateurs : on contrôle les moyens de motorisation de manière à respecter l'éco-conduite, par exemple en imposant la vitesse du véhicule.

Selon un mode de réalisation de l'invention, on détermine de la même manière au moins un indicateur énergétique pour un trajet. On rappelle qu'un trajet est constitué de plusieurs déplacements, et correspond au mouvement du véhicule entre le démarrage et l'arrêt complet du véhicule. L'indicateur énergétique de trajet est recalculé et peut être affiché à la fin de chaque déplacement.

La figure 3 illustre les informations affichées selon un mode de réalisation de l'invention. Sur cette figure, on représente dans la partie haute la courbe de la vitesse en fonction du temps pour le trajet déjà illustré sur la figure 2 et dans la partie basse, AFF indique les informations affichées à la fin de chaque déplacement. Ces informations contiennent la courbe de vitesse mesurée, la courbe de vitesse optimale, le deuxième indicateur énergétique pour le trajet IND(C) et le deuxième indicateur énergétique pour le dernier déplacement IND(B). Ces indicateurs énergétiques sont ceux calculés selon la première variante de réalisation et sont exprimés sous forme d'une note sur 10.

Le procédé selon l'invention peut être utilisé pour les véhicules automobiles, notamment hybrides ou électriques. Toutefois il peut être utilisé dans le domaine du transport routiers, le domaine ferroviaire, le domaine naval, le domaine aéronautique et le domaine des aéroglisseurs...

Variante de réalisation

En variante, l'indicateur énergétique peut consister en un conseil pour l'éco-conduite. On peut utiliser les mêmes étapes décrites ci-dessus en faisant des hypothèses a priori sur les vitesses futures pour calculer un conseil que l'on détermine et que l'on peut afficher à chaque instant. Les étapes sont identiques au procédé décrit ci-dessus, la figure 1 reste valable. La différence se situe essentiellement dans le calcul de la vitesse optimale, pour laquelle au lieu d'utiliser seulement les vitesses mesurées, on utilise aussi des vitesses futures que l'on estime. L'estimation de ces vitesses peut être effectuée au moyen de cartographies, de statistiques (en fonction des trajets antérieurs ou de contraintes de circulation à venir).

Selon un mode de réalisation de l'invention, dans un premier temps on détermine les points de passage passés et à venir. La détermination des points de passage passés est similaire à celle décrite pour l'étape 2). En revanche, pour déterminer les points de passage à venir, on détermine en fonction du déplacement du véhicule les points où la vitesse pourrait être imposée : on détermine la signalisation, le trafic et la configuration géographique de la route par exemple au moyen d'un appareil de géolocalisation. En outre, pour déterminer ces points de passage on peut utiliser les statistiques de trajets antérieurs. Une autre possibilité concerne les véhicules communiquant, dans ce cas on peut utiliser les capacités du véhicule à communiquer avec les véhicules proches et avec la signalisation pour prévoir les ralentissements à venir.

Dans un deuxième temps, on applique un algorithme d'optimisation, tel que décrit ci-dessus. On en déduit une vitesse optimale, notamment pour le point courant.

Ensuite, comme précédemment on détermine une énergie optimale.

Enfin, on détermine un indicateur sous forme de conseil en fonction de l'énergie optimale et l'énergie consommé. Ce conseil peut consister en un conseil d'accélération ou de décélération du véhicule. Ce conseil peut être affiché et/ou servir pour la commande du véhicule.

**Revendications**

1. Procédé de détermination d'au moins un indicateur énergétique (IND) d'un déplacement d'un véhicule, ledit déplacement (B) correspondant à un mouvement dudit véhicule entre deux arrêts successifs dudit véhicule, réalisant les étapes suivantes :

a) on mesure la vitesse instantanée ($V_{mes}$) du véhicule pendant ledit déplacement (B);

b) on identifie au moins un point de passage dudit déplacement (B), pour lequel ladite vitesse instantanée a été modifiée en fonction de conditions extérieures audit déplacement, ledit point de passage étant déterminé :

- en déterminant des minima locaux de ladite vitesse ($V_{mes}$) pendant un déplacement, ou

- au moyen d'un appareil de géolocalisation qui répertorie la signalisation routière, la configuration de la route et le trafic, ou

- en fonction de l'état du système de freinage du véhicule, ou

- au moyen de communications établies entre ledit véhicule et les véhicules situés dans son environnement proche ou de communications établies entre ledit véhicule et les feux de signalisation ;

c) on décompose ledit déplacement (B) en au moins un sous-déplacement (A), chaque sous-déplacement (A) étant défini entre deux points de passage successifs, et on détermine pour chaque sous-déplacement (A) une distance et une vitesse moyenne dudit sous-déplacement (A) au moyen de ladite vitesse instantanée mesurée ($V_{mes}$) ; et

d) on détermine, en tant que premier indicateur énergétique (IND), une vitesse optimale ($V_{opt}$) dudit déplacement (B), ladite vitesse optimale ($V_{opt}$) étant calculée pour chaque sous-déplacement (A) au moyen d'un algorithme d'optimisation qui détermine une vitesse qui minimise la consommation énergétique du véhicule, ledit algorithme étant contraint par les vitesses instantanées auxdits points de passage, par ladite distance et par ladite vitesse moyenne dudit sous-déplacement : ledit algorithme d'optimisation déterminant une vitesse optimale ($V_{opt}$) pour chaque sous-déplacement (A), en passant par lesdits points de passage identifiés, lesdits points de passage définissant la vitesse initiale et la vitesse finale de chaque sous-déplacement, et au moyen de ladite vitesse moyenne déterminée dudit sous-déplacement.

2. Procédé selon la revendication 1, dans lequel ledit algorithme d'optimisation est une programmation dynamique, ou une méthode hamiltonienne.

3. Procédé selon la revendication 2, dans lequel ledit algorithme d'optimisation est contraint par la vitesse maximale autorisée.

4. Procédé selon l'une des revendications précédentes, dans lequel on détermine un deuxième indicateur énergétique (2è IND) en mettant en oeuvre les étapes suivantes :

e) on calcule une énergie optimale ($E_{opt}$) en fonction de ladite vitesse optimale ($V_{opt}$) au moyen d'un modèle de propulsion dudit véhicule qui relie l'énergie consommée par le véhicule à la vitesse du véhicule ; et

f) on détermine ledit deuxième indicateur énergétique (2è IND) au moyen de ladite énergie optimale ($E_{opt}$) et de l'énergie consommée pendant ledit déplacement (B), ladite énergie consommée étant mesurée ou calculée à partir de ladite vitesse mesurée et dudit modèle de propulsion du véhicule.

5. Procédé selon la revendication 4, dans lequel ledit deuxième indicateur (2è IND) est une note proportionnelle au rapport de l'énergie optimale sur l'énergie consommée.

6. Procédé selon l'une des revendications 4 ou 5, dans lequel ledit modèle de propulsion du véhicule est construit à partir de l'équation sur l'axe longitudinal du véhicule du principe fondamental de la dynamique appliqué au véhicule, ledit modèle dépendant de la motorisation, des moyens de transmission, des dimensions des roues et de la masse du véhicule.

7. Procédé selon l'une des revendications 4 à 6, dans lequel le véhicule est un véhicule automobile électrique alimenté par une batterie, l'énergie consommée étant fonction de l'état de charge de ladite batterie.

8. Procédé selon l'une des revendications précédentes, dans lequel on affiche (AFF) ledit au moins un indicateur énergétique à la fin de chaque déplacement (B).

9. Procédé selon la revendication 8, dans lequel on affiche ledit au moins un indicateur sur le tableau de bord dudit véhicule, sur un site internet ou sur un dispositif portatif autonome, tel qu'un appareil de géolocalisation ou un téléphone portable.

10. Procédé selon la revendication 4, dans lequel ledit deuxième indicateur énergétique est un conseil d'accélération et/ou de décélération du véhicule.

11. Procédé selon l'une des revendications précédentes, dans lequel on réitère les étapes a) à d) pour plusieurs déplacements formant un trajet et on détermine ledit au moins un indicateur énergétique pour ledit trajet.

12. Procédé de contrôle d'un véhicule, **caractérisé en**

**ce qu'**on réalise les étapes suivantes :

> i) on détermine au moins un indicateur énergétique selon l'une des revendications précédentes ; et
> ii) on adapte la conduite (COM) dudit ledit véhicule en fonction dudit indicateur énergétique.

13. Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications précédentes, lorsque ledit programme est exécuté sur un ordinateur.

**Patentansprüche**

1. Verfahren zur Bestimmung eines Energieindikators (IND) für die Bewegung eines Fahrzeugs, wobei die Bewegung (B) einer Bewegung des Fahrzeugs zwischen zwei aufeinanderfolgenden Halten des Fahrzeugs entspricht, wobei die folgenden Schritte durchgeführt werden:

> a) die momentane Geschwindigkeit ($V_{mes}$) des Fahrzeugs während der Bewegung (B) wird gemessen;
> b) mindestens ein Durchgangspunkt der Bewegung (B) wird identifiziert, für den die momentane Geschwindigkeit als Funktion externer Bedingungen der Bewegung modifiziert wurde, wobei der Durchgangspunkt bestimmt wird:
>
> > - durch Bestimmen der lokalen Minima der Geschwindigkeit ($V_{mes}$) während einer Bewegung, oder
> > - mittels einer Geolokalisierungsvorrichtung, welche die Straßenverkehrszeichen, die Auslegung der Route und den Verkehr aufzeichnet, oder
> > - als Funktion des Zustands des Bremssystems des Fahrzeugs, oder
> > - mittels Kommunikationen, die zwischen dem Fahrzeug und den in seiner nahen Umgebung befindlichen Fahrzeugen hergestellt werden, oder Kommunikationen, die zwischen dem Fahrzeug und Verkehrsampeln hergestellt werden;
>
> c) die Bewegung (B) wird in mindestens eine Teilbewegung (A) zerlegt, wobei jede Teilbewegung (A) zwischen zwei aufeinanderfolgenden Durchgangspunkten definiert wird, und für jede Teilbewegung (A) wird eine Distanz und eine mittlere Geschwindigkeit der Teilbewegung (A) mittels der gemessenen momentanen Geschwindigkeit ($V_{mes}$) bestimmt; und
> d) als erster Energieindikator (IND), wird eine optimale Geschwindigkeit ($V_{opt}$) der Bewegung (B) bestimmt, wobei die optimale Geschwindigkeit ($V_{opt}$) für jede Teilbewegung (A) mittels eines Optimierungsalgorithmus berechnet wird, der eine Geschwindigkeit bestimmt, die den Energieverbrauch des Fahrzeugs minimiert, wobei der Algorithmus durch die momentanen Geschwindigkeiten an den Durchgangspunkten, durch die Distanz und durch die mittlere Geschwindigkeit der Teilbewegung eingeschränkt wird: wobei der Optimierungsalgorithmus eine optimale Geschwindigkeit ($V_{opt}$) für jede Teilbewegung (A) durch Hindurchgehen durch die identifizierten Durchgangspunkte bestimmt, wobei die Durchgangspunkte die Anfangsgeschwindigkeit und die Endgeschwindigkeit jeder Teilbewegung definieren, und mittels der bestimmten mittleren Geschwindigkeit der Teilbewegung.

2. Verfahren nach Anspruch 1, wobei der Optimierungsalgorithmus eine dynamische Programmierung oder eine Hamilton-Methode ist.

3. Verfahren nach Anspruch 2, wobei der Optimierungsalgorithmus durch die maximal zulässige Geschwindigkeit eingeschränkt wird.

4. Verfahren nach einem der vorhergehenden Ansprüche, wobei ein zweiter Energieindikator (2. IND) bestimmt wird, wobei die folgenden Schritte durchgeführt werden:

> e) eine optimale Energie ($E_{opt}$) wird als Funktion der optimalen Geschwindigkeit ($V_{opt}$) mittels eines Antriebsmodells des Fahrzeugs berechnet, das die von dem Fahrzeug verbrauchte Energie mit der Geschwindigkeit des Fahrzeugs in Beziehung bringt; und
> f) der zweite Energieindikator (2. IND) wird mittels der optimalen Energie ($E_{opt}$) und der während der Bewegung (B) verbrauchten Energie bestimmt, wobei die verbrauchte Energie aus der gemessenen Geschwindigkeit und dem Antriebsmodell des Fahrzeugs gemessen oder berechnet wird.

5. Verfahren nach Anspruch 4, wobei der zweite Indikator (2. IND) eine proportionale Größe im Verhältnis der optimalen Energie zur verbrauchten Energie ist.

6. Verfahren nach einem der Ansprüche 4 oder 5, wobei das Antriebsmodell des Fahrzeugs aus der Gleichung auf der Längsachse des Fahrzeugs des Grundprinzips der Dynamik, das auf das Fahrzeug angewendet wird, erstellt wird, wobei das Modell von der Motorisierung, den Getriebemitteln, den Abmessungen der Räder und der Masse des Fahrzeugs abhängig ist.

7. Verfahren nach einem der Ansprüche 4 bis 6, wobei das Fahrzeug ein Elektroauto ist, das von einer Batterie versorgt wird, wobei die verbrauchte Energie eine Funktion des Ladezustands der Batterie ist.

8. Verfahren nach einem der vorhergehenden Ansprüche, wobei der mindestens eine Energieindikator am Ende jeder Bewegung (B) angezeigt wird (AFF).

9. Verfahren nach Anspruch 8, wobei der mindestens eine Indikator auf dem Armaturenbrett des Fahrzeugs, auf einer Internet-Seite oder auf einer autonomen tragbaren Vorrichtung, wie einer Geolokalisierungsvorrichtung oder einem tragbaren Telefon, angezeigt wird.

10. Verfahren nach Anspruch 4, wobei der zweite Energieindikator eine Empfehlung zur Beschleunigung und/oder Verlangsamung des Fahrzeugs ist.

11. Verfahren nach einem der vorhergehenden Ansprüche, wobei die Schritte a) bis d) für mehrere Bewegungen wiederholt werden, die eine Strecke bilden, und der mindestens eine Energieindikator für die Strecke bestimmt wird.

12. Verfahren zur Steuerung eines Fahrzeugs, **dadurch gekennzeichnet, dass** die folgenden Schritte durchgeführt werden:

   i) mindestens ein Energieindikator wird nach einem der vorhergehenden Ansprüche bestimmt; und
   ii) das Fahren (COM) des Fahrzeugs wird als Funktion des Energieindikators angepasst.

13. Computerprogrammprodukt, welches von einem Kommunikationsnetz heruntergeladen werden kann und/oder auf einem computerlesbaren und/oder von einem Prozessor ausführbaren Medium gespeichert ist, umfassend Programmcodeinstruktionen zur Durchführung des Verfahrens einem der vorhergehenden Ansprüche, wenn das Programm auf einem Computer ausgeführt wird.

**Claims**

1. A method of determining at least one energy efficiency indicator (IND) of a path of a vehicle, said path (B) corresponding to a motion of said vehicle between two successive stops of said vehicle, comprising the following steps:

a) measuring the instant speed ($V_{mes}$) of the vehicle over said path (B),
b) identifying at least one waypoint of said path (B) for which said instant speed has been modified according to conditions external to said path, said waypoint being determined:

   - by determining local minima of said speed ($V_{mes}$) over a path, or
   - by means of a geolocation device that lists the road signs, the road configuration and the traffic, or
   - according to the condition of the brake system of the vehicle, or
   - by means of communications established between said vehicle and the vehicles in the immediate surroundings thereof, or communications established between said vehicle and the traffic lights,

c) decomposing said path (B) into at least one sub-path (A), each sub-path (A) being defined between two successive waypoints, and determining for each sub-path (A) a distance and an average speed of said sub-path (A) by means of said measured instant speed ($V_{mes}$), and
d) determining, as the first energy efficiency indicator (IND), an optimal speed ($V_{opt}$) of said path (B), said optimal speed ($V_{opt}$) being calculated for each sub-path (A) by means of an optimization algorithm that determines a speed minimizing the energy consumption of the vehicle, said algorithm being constrained by the instant speeds at said waypoints, by said distance and by said average speed of said sub-path: said optimization algorithm determining an optimal speed ($V_{opt}$) for each sub-path (A) by passing through said identified waypoints, said waypoints defining the initial speed and the final speed of each sub-path, and by means of said average speed determined for said sub-path.

2. A method as claimed in claim 1, wherein said optimization algorithm is a dynamic programming algorithm or a Hamiltonian method.

3. A method as claimed in claim 2, wherein said optimization algorithm is constrained by the maximum allowable speed.

4. A method as claimed in any one of the previous claims, wherein a second energy efficiency indicator (2nd IND) is determined by carrying out the following steps:

   e) calculating an optimal energy ($E_{opt}$) as a function of said optimal speed ($V_{opt}$) by means of a propulsion model of said vehicle that relates the energy consumed by the vehicle to the speed of the vehicle, and

f) determining said second energy efficiency indicator (2nd IND) by means of said optimal energy ($E_{opt}$) and of the energy consumed over said path (B), said consumed energy being measured or calculated from said measured speed and said vehicle propulsion model.

5. A method as claimed in claim 4, wherein said second indicator (2nd IND) is a mark proportional to the ratio of the optimal energy to the consumed energy.

6. A method as claimed in any one of claims 4 or 5, wherein said vehicle propulsion model is constructed from the equation on the longitudinal axis of the vehicle of the fundamental principle of dynamics applied to the vehicle, said model depending on the powertrain, the transmission means, the dimensions of the wheels and the mass of the vehicle.

7. A method as claimed in any one of claims 4 to 6, wherein the vehicle is an electric motor vehicle powered by a battery, the consumed energy depending on the state of charge of said battery.

8. A method as claimed in any one of the previous claims, wherein said at least one energy efficiency indicator is displayed (AFF) at the end of each path (B).

9. A method as claimed in claim 8, wherein said at least one indicator is displayed on the dashboard of said vehicle, on a website or a stand-alone portable device such as a geolocation device or a mobile phone.

10. A method as claimed in claim 4, wherein said second energy efficiency indicator is a vehicle acceleration and/or deceleration tip.

11. A method as claimed in any one of the previous claims, wherein steps a) to d) are repeated for several paths forming a trip and said at least one energy efficiency indicator is determined for said trip.

12. A vehicle control method, **characterized in that** it comprises the following steps:

i) determining at least one energy efficiency indicator as claimed in any one of the previous claims, and
ii) adapting the driving (COM) of said vehicle according to said energy efficiency indicator.

13. A computer program product downloadable from a communication network and/or recorded on a computer readable medium and/or processor executable, comprising program code instructions for implementing the method as claimed in any one of the previous claims, when said program is executed on a computer.

$$\boxed{V_{mes}, \text{d}}$$

$$\downarrow$$

$$\boxed{\text{IND}}$$

$$\downarrow$$

$$\boxed{\text{AFF}}$$

$$\downarrow$$

$$\boxed{\text{COM}}$$

**Figure 1**

$$\boxed{V_{mes}, \text{d}}$$

$$\downarrow$$

$$\boxed{\text{IND}}$$

$$\downarrow$$

$$\boxed{E_{opt}}$$

$$\downarrow$$

$$\boxed{\text{2è IND}}$$

$$\downarrow$$

$$\boxed{\text{AFF}}$$

$$\downarrow$$

$$\boxed{\text{COM}}$$

**Figure 2**

Figure 3

Figure 4

## RÉFÉRENCES CITÉES DANS LA DESCRIPTION

**Documents brevets cités dans la description**

- DE 19901532 A
- KR 100520941 B1
- EP 2166309 A
- EP 1973078 A1
- EP 2147285 A1
- EP 2311683 A1
- US 20100049400 A1